(19) Europäisches Patentamt
European Patent Office
Office européen des brevets

(11) **EP 3 779 405 B1**

(12) **EUROPEAN PATENT SPECIFICATION**

(45) Date of publication and mention
of the grant of the patent:
**18.10.2023 Bulletin 2023/42**

(21) Application number: **19775392.4**

(22) Date of filing: **15.02.2019**

(51) International Patent Classification (IPC):
*G01N 15/14* $^{(2006.01)}$     *G01N 15/10* $^{(2006.01)}$

(52) Cooperative Patent Classification (CPC):
**G01N 15/1459; G01N 15/1404; G01N 15/1434;**
G01N 2015/1006; G01N 2015/1409

(86) International application number:
**PCT/JP2019/005589**

(87) International publication number:
**WO 2019/187754 (03.10.2019 Gazette 2019/40)**

(54) **FLOW CYTOMETER AND PARTICLE DETECTION METHOD**

DURCHFLUSSZYTOMETER UND VERFAHREN ZUR DETEKTION VON TEILCHEN

CYTOMÈTRE DE FLUX ET PROCÉDÉ POUR DÉTECTER DES PARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018   JP 2018067098**

(43) Date of publication of application:
**17.02.2021 Bulletin 2021/07**

(73) Proprietor: **SYSMEX CORPORATION
Kobe-shi
Hyogo 651-0073 (JP)**

(72) Inventors:
• **HAYASHI Tomoya
  Kobe-shi, Hyogo 651-0073 (JP)**

• **MATSUMOTO Shohei
  Kobe-shi, Hyogo 651-0073 (JP)**
• **YAMADA Kazuhiro
  Kobe-shi, Hyogo 651-0073 (JP)**

(74) Representative: **Hoffmann Eitle
Patent- und Rechtsanwälte PartmbB
Arabellastraße 30
81925 München (DE)**

(56) References cited:
WO-A1-2018/047815     WO-A1-2018/198470
JP-A- S6 152 714      JP-A- H09 126 989
JP-A- 2008 533 440    JP-A- 2009 522 586
JP-A- 2013 167 582    JP-A- 2015 227 805
JP-A- 2016 217 888    US-A1- 2005 105 077
US-A1- 2014 339 446

## Description

TECHNICAL FIELD

The present invention relates to a flow cytometer and a particle detection method.

BACKGROUND ART

A flow cytometer is widely used for analysis of a biological sample liquid containing particles such as cells, microorganisms, etc. In the flow cytometer, light generated from particles in the biological sample liquid flowing in a transparent flow cell, is detected. Inside the flow cell, a flow of a sample liquid such as the biological sample liquid and a flow of a sheath liquid form a laminar flow. The particles in the sample liquid can be optically analyzed one by one by causing the particles to flow one by one into the flow cell.

PATENT LITERATURE 1 [PTL 1] discloses: irradiating a particle inside a flow cell with light; modulating light generated from the particle by use of an optical grating; and calculating a flow velocity of the particle that flows in the flow cell, based on a detection cycle of modulated light. An image of the particle is captured with the calculated flow velocity of the particle being synchronized with a charge transfer timing of a charge coupled device (CCD) array, whereby a bright image of the particle having a high SN ratio can be obtained.

PATENT LITERATURE 2 [PTL 2] discloses: a portable miniaturized cytometer for identifying and/or counting selected particles in a fluid sample such as a blood sample.

CITATION LIST

[PATENT LITERATURE]

[PTL 1] US Patent No. 6507391
[PTL 2] US 2005/105077 A1

SUMMARY OF THE INVENTION

PROBLEMS TO BE SOLVED BY THE INVENTION

When optically detecting a particle that flows in a flow cell, a time during which the particle passes across light applied toward the flow cell corresponds to an exposure time. Therefore, when the velocity of the particle flowing in the flow cell is higher, the intensity of the light generated from the particle becomes lower and a signal obtained from a detector that detects the light generated from the particle also becomes weaker. Meanwhile, when the velocity of the particle flowing in the flow cell is lower, the intensity of the light generated from the particle becomes higher and the signal obtained from the detector that detects the light generated from the particle also becomes stronger. Thus, in the flow cytometer, the intensity of the signal obtained from the detector is affected by the flow velocity of the particle.

However, if the intensity of the signal obtained from the detector varies for each of particles to be measured, such variation will adversely affect analysis of the particles and therefore is not desirable. For example, in a flow cytometer that captures an image of a particle according to TDI (Time Delay Integration), since the brightness of the captured image varies according to the flow velocity, it is difficult to obtain an image having a constant brightness for each particle. According to findings of the inventors of the present invention, the flow velocity of a liquid flowing in a flow cell is affected by the ambient temperature, apparatus temperature, liquid temperature, liquid viscosity, change in the liquid level of the liquid in a supply chamber, etc. For example, when the temperature around the flow cell is increased from 15°C to 30°C, the viscosity of the liquid flowing in the flow cell is lowered, and the flow velocity of the liquid flowing in the flow cell may sometimes be increased from about 2 μL/sec to about 7 μL/sec.

An object of the present invention is to provide a flow cytometer, as defined in claim 1, and a particle detection method, as defined in claim 14. Preferred features of the invention are set out in the dependent claims.

SOLUTION TO THE PROBLEMS

A flow cytometer according to an aspect of the present invention includes: a flow cell 10 in which a liquid flows; a liquid sending unit 40 configured to send the liquid into the flow cell 10; a controller 300 configured to obtain information related to a flow velocity of the liquid flowing in the flow cell 10; a light source 121 configured to irradiate the liquid flowing in the flow cell 10 with light; and a detector 162 configured to detect light generated from a particle in the liquid irradiated with light. The controller 300 changes a liquid sending condition for the liquid sending unit 40, based on the obtained information related to the flow velocity.

According to the above flow cytometer, the controller 300 changes the liquid sending condition for the liquid sending unit 40, based on the information related to the flow velocity, whereby it is possible to reduce influence of change in the flow velocity on particle detection.

In the above flow cytometer, the controller 300 may further changes a detection condition for the detector 162, based on the obtained information related to the flow velocity.

According to the above flow cytometer, the controller 300 changes the detection condition for the detector 162, based on the information related to the flow velocity, whereby it is possible to reduce influence of change in the flow velocity on particle detection.

In the above flow cytometer, the controller 300 may selectively changes the liquid sending condition for the liquid sending unit 40 or the detection condition for the detector 162, based on the obtained information related to the flow velocity.

According to the above flow cytometer, the liquid sending condition for the liquid sending unit 40 or the detection condition for the detector 162 is selectively changed based on the information related to the flow velocity, whereby it is possible to reduce influence of change in the flow velocity on particle detection.

In the above flow cytometer, the controller 300 may change the liquid sending condition for the liquid sending unit 40 when a difference between a measurement value of the obtained flow velocity and a reference value of a flow velocity is greater than a predetermined value, and may change the detection condition for the detector 162 when the difference between the measurement value of the obtained flow velocity and the reference value of the flow velocity is smaller than the predetermined value.

According to the above flow cytometer, when the difference between the measurement value of the flow velocity and the reference value of the flow velocity is great, the liquid sending condition for the liquid sending unit 40 is changed to change the flow velocity, whereby the flow velocity can be approximated to the reference value. Meanwhile, when the difference between the measurement value of the flow velocity and the reference value of the flow velocity is too small to be reduced by changing the liquid sending condition, influence of the difference in flow velocity on particle detection can be reduced by changing the detection condition for the detector 162.

In the above flow cytometer, the controller 300 may cause the liquid sending unit 40 to reduce an amount of the liquid to be sent into the flow cell 10 when the measurement value of the obtained flow velocity is greater than the reference value of the flow velocity and the difference is greater than the predetermined value, and may cause the liquid sending unit 40 to increase the amount of the liquid to be sent into the flow cell 10 when the measurement value of the obtained flow velocity is smaller than the reference value of the flow velocity and the difference is greater than the predetermined value.

According to the above flow cytometer, the amount of the liquid to be sent to the flow cell 10 by the liquid sending unit 40 is changed based on feedback of the difference between the measurement value of the flow velocity and the reference value of the flow velocity, whereby the flow velocity can be approximated to the reference value.

In the above flow cytometer, the detector 162 may include a photoelectric converter configured to perform photoelectric conversion of the light generated from the particle flowing in the flow cell 10. The controller 300 may further change sensitivity of the detector 162, based on the obtained information related to the flow velocity. The controller 300 may increase the sensitivity of the detector 162 when the measurement value of the obtained flow velocity is greater than the reference value of the flow velocity and the difference is smaller than the predetermined value, and may reduce the sensitivity of the detector 162 when the measurement value of the obtained flow velocity is smaller than the reference value of the flow velocity and the difference is smaller than the predetermined value.

According to the above flow cytometer, the sensitivity of the detector 162 is changed based on feedback of the difference between the measurement value of the flow velocity and the reference value of the flow velocity, whereby it is possible to reduce variation in the intensity of a signal obtained from the detector 162 for detecting light generated from the particle.

The above flow cytometer may further include a lens 137 configured to condense the light generated from the particle in the liquid irradiated with light. The controller 300 may further change magnification of an image, of the particle, formed by the lens 137, based on the obtained information related to the flow velocity. The controller 300 may reduce the magnification of the image of the particle formed by the lens 137, when the measurement value of the obtained flow velocity is greater than the reference value of the flow velocity and the difference is smaller than the predetermined value, and may increase the magnification of the image of the particle formed by the lens 137 when the measurement value of the obtained flow velocity is smaller than the reference value of the flow velocity and the difference is smaller than the predetermined value.

According to the above flow cytometer, the magnification of the image of the particle is changed based on feedback of the difference between the measurement value of the flow velocity and the reference value of the flow velocity, whereby it is possible to reduce variation in the light intensity of the image of the particle.

In the above flow cytometer, the controller 300 may further change the intensity of light emitted from the light source 121, based on the obtained information related to the flow velocity. The controller 300 may increase the intensity of light emitted from the light source 121 when the measurement value of the obtained flow velocity is greater than the reference value of the flow velocity, and may reduce the intensity of light emitted from the light source 121 when the measurement value of the obtained flow velocity is smaller than the reference value of the flow velocity and the difference is smaller than the predetermined value.

According to the above flow cytometer, the intensity of light emitted from the light source 121 is changed based on feedback of the difference between the measurement value of the flow velocity and the reference value of the flow velocity, whereby it is possible to reduce variation in the intensity of light generated from the particle.

In the above flow cytometer, the detector 162 may capture an image of the particle flowing in the flow cell 10. The detector 162 may capture the image of the particle flowing in the flow cell 10, according to TDI (Time Delay Integration). The detector 162 may set a scanning rate, based on the obtained information related to the flow velocity.

According to the above flow cytometer, for example, when the particle is a cell in which a specific gene locus in a chromosome is fluorescence-labeled, it is possible to reduce influence of change in the flow velocity on the brightness of the fluorescence image of the cell.

In the above flow cytometer, the controller 300 calculates the information related to the flow velocity, based on an optical property of the particle flowing in the flow cell 10.

According to the above flow cytometer, the flow velocity of the liquid flowing in the flow cell 10 can be accurately calculated.

A flow cytometer according to an aspect of the present invention includes: a flow cell 10 in which a liquid flows; a liquid sending unit 40 configured to send the liquid into the flow cell 10; a controller 300 configured to obtain information related to a flow velocity of the liquid flowing in the flow cell 10; a light source 121 configured to irradiate the liquid flowing in the flow cell 10 with light; and a detector 162 configured to detect light generated from the particle in the liquid irradiated with light. The controller changes sensitivity of the detector, based on the obtained information related to the flow velocity. The controller 300 changes sensitivity of the detector 162, based on the obtained information related to the flow velocity.

According to the above flow cytometer, the controller 300 changes the sensitivity of the detector 162, based on the information related to the flow velocity, whereby it is possible to reduce influence of change in the flow velocity on particle detection.

A flow cytometer according to an aspect of the present invention includes: a flow cell 10 in which a liquid flows; a liquid sending unit 40 configured to send the liquid into the flow cell 10; a controller 300 configured to obtain information related to a flow velocity of the liquid flowing in the flow cell 10; a light source 121 configured to irradiate the liquid flowing in the flow cell 10 with light; and a detector 162 configured to detect light generated from the particle in the liquid irradiated with light. The controller 300 changes an intensity of light emitted from the light source 121, based on the obtained information related to the flow velocity.

According to the above flow cytometer, the intensity of light emitted from the light source 121 is changed based on the information related to the flow velocity, whereby it is possible to reduce influence of change in the flow velocity on particle detection.

A particle detection method according to an aspect of the present invention includes: sending a liquid into a flow cell 10; obtaining information related to a flow velocity of the liquid flowing in the flow cell 10; changing a liquid sending condition for sending the liquid into the flow cell 10, based on the obtained information related to the flow velocity; irradiating the liquid flowing in the flow cell 10 with light; and detecting light generated from a particle in the liquid irradiated with light.

According to the above particle detection method, the liquid sending condition for sending the liquid into the flow cell 10 is changed based on the information related to the flow velocity, whereby it is possible to reduce influence of change in the flow velocity on particle detection.

In the above particle detection method, a detection condition for detecting the light generated from the particle may be changed based on the obtained information related to the flow velocity.

According to the above particle detection method, the detection condition for detecting light generated from the particle is changed based on the information related to the flow velocity, whereby it is possible to reduce influence of change in the flow velocity on particle detection.

In the above particle detection method, the liquid sending condition or the detection condition may be selectively changed based on the obtained information related to the flow velocity.

According to the above particle detection method, the liquid sending condition or the detection condition is selectively changed based on the information related to the flow velocity, whereby it is possible to reduce influence of change in the flow velocity on particle detection.

In the above particle detection method, the liquid sending condition may be changed when a difference between a measurement value of the obtained flow velocity and a reference value of a flow velocity is greater than a predetermined value, and the detection condition may be changed when the difference between the measurement value of the obtained flow velocity and the reference value of the flow velocity is smaller than the predetermined value.

According to the above particle detection method, when the difference between the measurement value of the flow velocity and the reference value of the flow velocity is great, the liquid sending condition for the liquid sending unit 40 is changed to change the flow velocity, whereby the flow velocity can be approximated to the reference value. Meanwhile, when the difference between the measurement value of the flow velocity and the reference value of the flow velocity is too small to be reduced by changing the liquid sending condition for sending the liquid into the flow cell 10, influence of the difference in flow velocity on particle detection can be reduced by changing the detection condition for the detector 162.

In the above particle detection method, the amount of the liquid to be sent into the flow cell 10 may be reduced when the measurement value of the obtained flow velocity is greater than the reference value of the flow velocity and the difference is greater than the predetermined value, and the amount of the liquid to be sent into the flow cell 10 may be increased when the measurement value of the obtained flow velocity is smaller than the reference value of the flow velocity and the difference is greater than the predetermined value.

According to the above particle detection method, the amount of the liquid to be sent to the flow cell 10 is changed based on feedback of the difference between the measurement value of the flow velocity and the reference value of the flow velocity, whereby the flow velocity can be approximated to the reference value.

In the above particle detection method, the light generated from the particle in the liquid may be subjected to photoelectric conversion by a photoelectric converter. Sensitivity of a detector 162 for detecting the light generated from the particle in the liquid may be changed based on the obtained information related to the flow velocity. The sensitivity of the detector 162 for detecting the light may be increased when the measurement value of the obtained flow velocity is greater than the reference value of the flow velocity and the difference is smaller than the predetermined value, and the sensitivity of the detector 162 may be reduced when the measurement value of the flow velocity is smaller than the reference value of the flow velocity and the difference is smaller than the predetermined value.

According to the above particle detection method, the sensitivity of the detector 162 is changed based on feedback of the difference between the measurement value of the flow velocity and the reference value of the flow velocity, whereby it is possible to reduce variation in the intensity of a signal obtained from the detector 162 for detecting light generated from the particle.

In the above particle detection method, the light generated from the particle in the liquid irradiated with light may be condensed by a lens 137. Magnification of an image, of the particle, formed by the lens 137 may be changed based on the obtained information related to the flow velocity. The magnification of the image of the particle formed by the lens may be reduced when the measurement value of the obtained flow velocity is greater than the reference value of the flow velocity and the difference is smaller than the predetermined value, and the magnification of the image of the particle formed by the lens may be increased when the measurement value of the obtained flow velocity is smaller than the reference value of the flow velocity and the difference is smaller than the predetermined value.

According to the above particle detection method, the magnification of the image of the particle is changed based on feedback of the difference between the measurement value of the flow velocity and the reference value of the flow velocity, whereby it is possible to reduce variation in the light intensity of the image of the particle.

In the above particle detection method, the intensity of light applied to the inside of the flow cell 10 may be changed based on the obtained information related to the flow velocity. The intensity of light applied to the inside of the flow cell 10 may be increased when the measurement value of the flow velocity is greater than the reference value of the flow velocity and the difference is smaller than the predetermined value, and the intensity of light applied to the inside of the flow cell 10 may be reduced when the measurement value of the flow velocity is smaller than the reference value of the flow velocity and the difference is smaller than the predetermined value.

According to the above particle detection method, the intensity of light applied to the flow cell 10 is changed based on feedback of the difference between the measurement value of the flow velocity and the reference value of the flow velocity, whereby it is possible to reduce variation in the intensity of light generated from the particle.

In the above particle detection method, detecting the light generated from the particle may include capturing an image of the particle flowing in the flow cell 10. The image of the particle flowing in the flow cell 10 may be captured according to TDI (Time Delay Integration). A scanning rate of a detector for detecting the light generated from the particle in the liquid may be set based on the obtained information related to the flow velocity.

According to the above particle detection method, for example, when the particle is a cell in which a specific gene locus in a chromosome is fluorescence-labeled, it is possible to reduce influence of change in the flow velocity on the brightness of the fluorescence image of the cell.

In the above particle detection method, the information related to the flow velocity is calculated based on an optical property of the particle flowing in the flow cell 10.

According to the above particle detection method, the flow velocity of the liquid flowing in the flow cell 10 can be accurately calculated.

A particle detection method according to an aspect of the present invention includes: sending a liquid into a flow cell 10; obtaining information related to a flow velocity of the liquid flowing in the flow cell 10; irradiating the liquid flowing in the flow cell 10 with light; detecting light generated from the particle in the liquid irradiated with light; and changing sensitivity of a detector 162 for detecting the light generated from the particle in the liquid, based on the obtained information related to the flow velocity.

According to the above particle detection method, the sensitivity of the detector 162 is changed based on the information related to the flow velocity, whereby it is possible to reduce influence of change in the flow velocity on particle detection.

A particle detection method according to an aspect of the present invention includes: sending a liquid into a flow cell 10; obtaining information related to a flow velocity of the liquid flowing in the flow cell 10; irradiating the liquid flowing in the flow cell 10 with light; detecting light generated from the particle in the liquid irradiated with light; and changing an intensity of light applied to the inside of the flow cell 10, based on the obtained information related to the flow velocity.

According to the above particle detection method, the intensity of light applied to the inside of the flow cell 10 is changed based on the information related to the flow velocity, whereby it is possible to reduce influence of change in the flow velocity on particle detection.

ADVANTAGEOUS EFFECTS OF THE INVENTION

According to the present invention, it is possible to provide a flow cytometer and a particle detection method in which detection of light generated from a particle is less likely to be affected by change in the flow velocity of a liquid flowing inside a flow cell.

BRIEF DESCRIPTION OF THE DRAWINGS

[FIG. 1] FIG. 1 is a schematic diagram showing a flow path, an optical system, and the like of a flow cytometer according to an embodiment.
[FIG. 2] FIG. 2 is a schematic diagram showing the optical system and the like of the flow cytometer according to the embodiment.
[FIG. 3] FIG. 3 is a schematic diagram showing an optical grating according to the embodiment.
[FIG. 4] FIG. 4 is a graph schematically showing a relationship between the flow velocity of a particle flowing in a flow cell and the brightness of an image of the particle captured.
[FIG. 5] FIG. 5 is a schematic diagram showing the flow path and the like of the flow cytometer according to the embodiment.
[FIG. 6] FIG. 6 is a schematic diagram showing the flow path and the like of the flow cytometer according to the embodiment.
[FIG. 7] FIG. 7 is a flowchart showing a particle detection method according to the embodiment.
[FIG. 8] FIG. 8 shows a continuation of the flowchart showing the particle detection method according to the embodiment.
[FIG. 9] FIG. 9 shows a continuation of the flowchart showing the particle detection method according to the embodiment.

DESCRIPTION OF EMBODIMENTS

Hereinafter, an embodiment of the present invention will be described with reference to the drawings. In the following description related to the drawings, the same or similar components are designated by the same or similar reference numerals. However, the drawings are schematic. Therefore, specific dimensions and the like should be determined in light of the following description. It is a matter of course that portions having different dimensional relationships and ratios are included between the drawings.

In the following embodiment, the present invention is applied to fluorescence detection in fluorescence in situ hybridization (FISH). In a pretreatment for FISH, a probe is hybridized with a target sequence present in a chromosome of a cell. The probe contains a nucleic acid sequence complementary to the target sequence, and is labeled with a fluorescent dye. The chromosome may be treated by a plurality of probes labeled with different fluorescent dyes for respective target sequences. For example, if translocation of a gene containing a target sequence occurs in a chromosome, the position at which a bright point of fluorescence is observed on the chromosome is shifted from the normal position. Therefore, the translocation can be detected by FISH. Furthermore, according to FISH, not only translocation but also chromosome abnormalities such as deletion, inversion, and duplication can be detected.

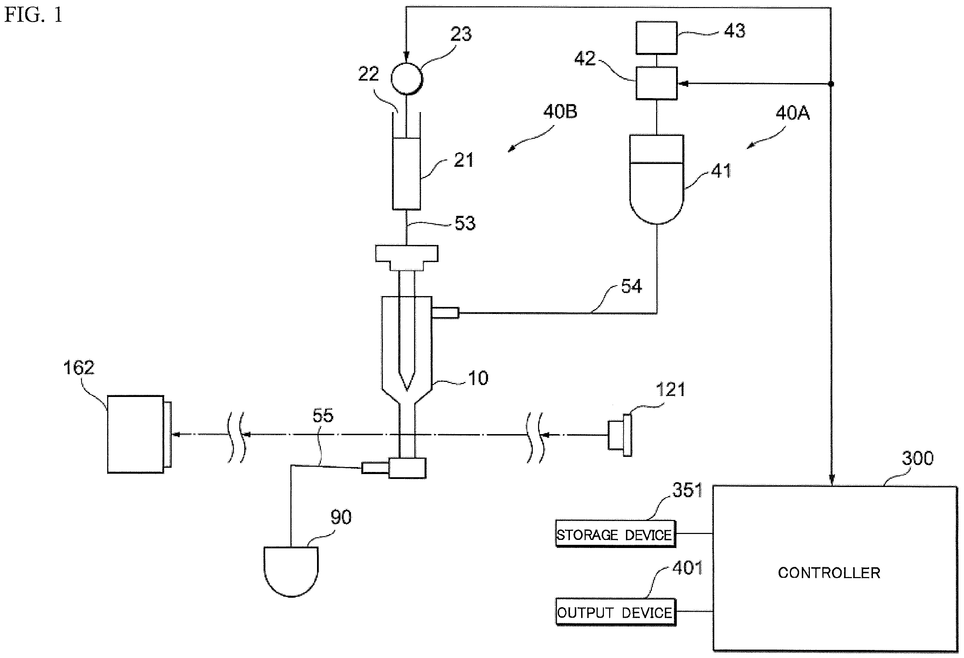

As shown in FIG. 1, a flow cytometer according to the embodiment includes: a flow cell 10 in which a liquid flows; a liquid sending unit 40 that sends the liquid into the flow cell 10; a controller 300 that obtains information related to the flow velocity of the liquid flowing in the flow cell 10; a light source 121 that irradiates the liquid flowing in the flow cell 10 with light; and a detector 162 that detects a particle in the liquid irradiated with light. In the flow cytometer according to the embodiment, the controller 300 changes a liquid sending condition for the liquid sending unit 40, based on the information related to the flow velocity. The controller 300 is implemented by a central processing unit (CPU).

The liquid sending unit 40 includes: a sheath liquid sending unit 40A that sends a sheath liquid to the flow cell 10; and a sample liquid sending unit 40B that sends a sample liquid containing particles to the flow cell 10.

The sheath liquid sending unit 40A includes: a chamber 41 that stores the sheath liquid therein; an electropneumatic converter 42 that receives an electric control signal and applies an air pressure to the chamber 41; and a compressor 43 that is a source of the air pressure of the electropneumatic converter 42. The electropneumatic converter 42 is an element capable of adjusting an air pressure to be discharged, based on an inputted electric signal (current or voltage). When an air pressure is applied into the chamber 41, the sheath liquid in the chamber 41 is sent to the flow cell 10 through a sheath liquid flow path 54. The sheath liquid sending unit 40A may be a syringe pump or a diaphragm pump.

The sample liquid sending unit 40B includes, for example, a syringe 21, an operating element 22 such as a plunger or a piston inserted in the syringe 21, and a driving device 23 such as a motor that moves the operating element 22. When the driving device 23 presses the operating element 22, the sample liquid is sent to the flow cell 10 through a sample liquid flow path 53. The sample liquid sending unit 40B may be a diaphragm pump. Alternatively, the sample liquid sending unit 40B may send the sample liquid by using an air pressure that is generated by an electropneumatic converter connected to a pressure source such as a compressor.

The sheath liquid sending unit 40A may send the sheath liquid also to the sample liquid sending unit 40B to balance the pressure of the sheath liquid and the pressure of the sample liquid in the flow cell 10.

A particle contained in the sample liquid is either a sample particle whose characteristics are to be analyzed by the flow cytometer or a reference particle for monitoring the flow velocity of a particle flowing in the flow cell 10. In the present embodiment, the sample particle is a cell treated by a plurality of probes. The reference particle is a particle different from the sample particle. The reference particle is, for example, a non-biological particle, and is composed of a polymer such as latex, or an inorganic substance. The reference particle has an optical property such that it generates scattered light having a higher intensity than the sample particle, when irradiated with light. A sample liquid containing both the sample particle and the reference particle may be supplied to the flow cell 10. Alternatively, a sample liquid containing the sample particle and a sample liquid containing the reference particle may be separately supplied to the flow cell 10.

The flow cell 10 is formed of a transparent material such as quartz. Inside the flow cell 10, a flow of the sample liquid and a flow of the sheath liquid form a laminar flow, and the sample liquid flows so as to be surrounded by the flow of the sheath liquid. The sample liquid and the sheath liquid, having flowed in the flow cell 10, pass through a waste liquid flow path 55 and are discharged from an end portion of the waste liquid flow path 55 into a waste liquid chamber 90. For example, the end portion of the waste liquid flow path 55 is exposed to the air.

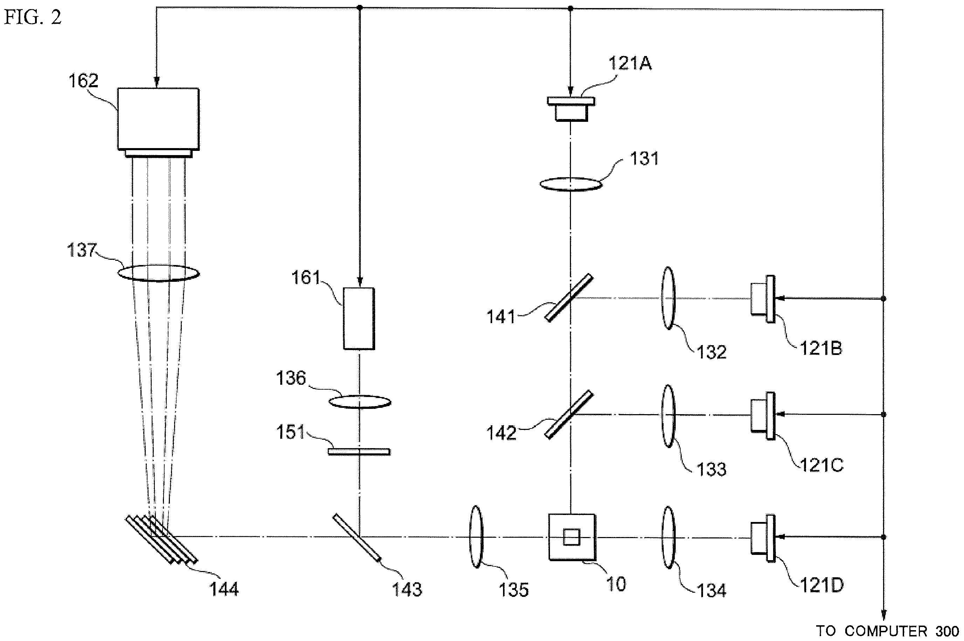

As shown in FIG. 2, the flow cytometer according to the embodiment is provided with an optical system capable of measuring the flow velocity of a particle, based on the optical property of the reference particle flowing in the flow cell 10. In FIG. 2, the flow cell 10 is indicated by a cross section. The optical system capable of measuring the flow velocity of the reference particle flowing in the flow cell 10 is provided with a light source 121A that applies light to the flow cell 10. As the light source 121A, a laser, a light-emitting diode, or the like can be used. For example, the light emitted from the light source 121A is condensed by a lens 131, is transmitted through dichroic mirrors 141, 142, and is condensed onto the flow cell 10. In a case where the reference particle flowing in the flow cell 10 has an optical property such that it generates Mie-scattered light as reaction light when irradiated with light, scattered light having the same wavelength as the light emitted from the light source 121A is generated from the particle. The scattered light is condensed by a lens 135 and is reflected by a dichroic mirror 143.

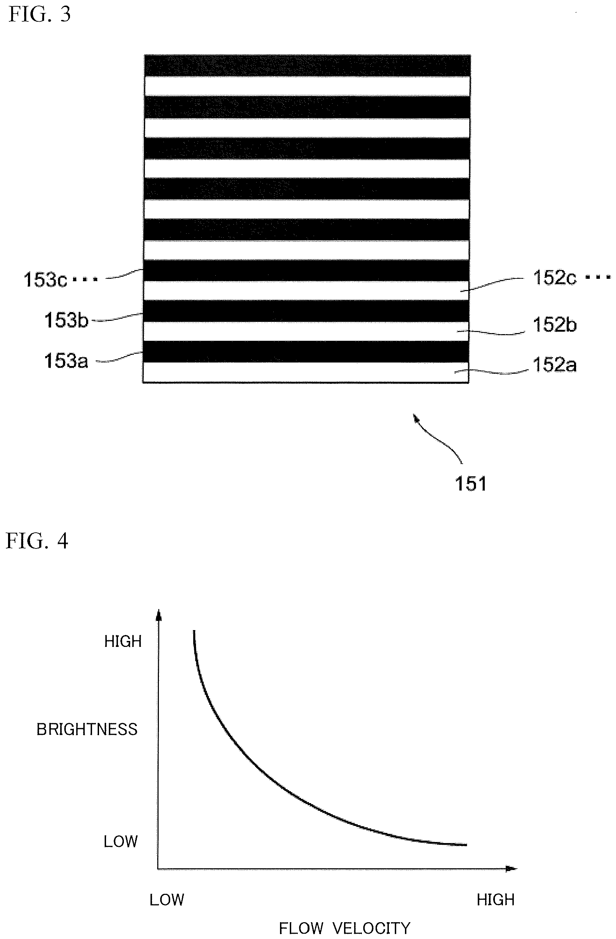

An optical grating 151 is disposed on an optical path of the scattered light having been reflected by the dichroic mirror 143. As shown in FIG. 3, the optical grating 151 includes a plurality of transparent portions 152a, 152b, 152c, ···, and a plurality of opaque portions 153a, 153b, 153c, ···, which are alternatively disposed. The plurality of transparent portions 152a, ···, and the plurality of opaque portions 153a, ···, each have a rectangular shape, for example. The pitch of the optical grating 151 is constant. The plurality of transparent portions 152a, ···, and the plurality of opaque portions 153a, ···, each have a width approximated to the size of the reference particle that flows in the flow cell 10 shown in FIG. 2, for example.

When the reference particle passes across the light emitted from the light source 121A in the flow cell 10, scattered light generated from the reference particle alternately passes through the plurality of transparent portions 152a, ···, and the plurality of opaque portions 153a, ···, of the optical grating 151 shown in FIG. 3. Therefore, the intensity of the scattered light is modulated by the optical grating 151. The modulated light, of the scattered light, generated by the optical grating 151 is condensed by a lens 136 shown in FIG. 2, and is detected by a flow velocity detector 161. As the flow velocity detector 161, an optical detector including a photoelectric converter such as a photomultiplier tube or a photodiode can be used.

The cycle with which the flow velocity detector 161 detects the modulated light is proportional to the flow velocity of the particle flowing in the flow cell 10. The flow velocity detector 161 is connected to the controller 300 shown in FIG. 1. For example, the controller 300 specifies a cycle f according to fast Fourier transform (FFT), and calculates, as a value related to a flow velocity, a measurement value of a flow velocity v of the particle flowing in the flow cell 10, based on the following equation (1).

$$v = fp \cdots (1)$$

In equation (1), p indicates the pitch of the optical grating 151. The value of the flow velocity may be an average value. The average value may be calculated by moving average.

The configuration of the equipment for measuring the flow velocity is not limited to the above-described one. For example, it is assumed that an already-known beam diameter, in the flow cell 10, of the light applied to the flow cell 10 is $D_B$, an already-known diameter of the reference particle is $D_S$, and a pulse width of a fluorescence that occurs when the reference particle passes across the beam diameter is $P_W$. Then, the flow velocity v of the particle flowing in the flow cell 10 may be calculated based on the following equation (2).

$$v = (D_B + D_S)/P_W \cdots (2)$$

In this case, the optical grating 151 is not necessary, and the controller 300 may calculate the flow velocity v, based on the pulse width of the reaction light detected by the flow velocity detector 161.

Meanwhile, the equipment for measuring the flow velocity may be provided with two particle detectors. In this case, the controller 300 may calculate the flow velocity v of the particle, based on an already-known distance between the two particle detectors, and on a time from when a reference particle is detected by the upstream-side particle detector to when the reference particle is detected by the downstream-side particle detector. Alternatively, the equipment for measuring the flow velocity may be provided with a flowmeter disposed on a flow path connected to the outlet side of the flow cell 10. In this case, the controller 300 may calculate the flow velocity v of the particle, based on a flow rate measured by the flowmeter, a difference between the opening diameter of the flow cell 10 and the opening diameter of the flow path, and the like.

As shown in FIG. 2, the flow cytometer according to the embodiment is provided with the optical system capable of capturing an image of a cell that flows in the flow cell 10. The optical system capable of capturing an image of a cell that flows in the flow cell 10 further includes light sources 121B, 121C, and 121D in addition to the light source 121A.

The light source 121A emits light having a wavelength $\lambda_{E1}$. The light source 121A can adjust the intensity of the light emitted. In a case where a target sequence in a cell is labeled with a fluorescent dye that is excited by the light of the wavelength $\lambda_{E1}$ emitted from the light source 121A, a fluorescence having a wavelength $\lambda_{F1}$ is emitted from a gene locus including the target sequence of the cell that flows in the flow cell 10. The wavelength $\lambda_{F1}$ is the wavelength of green, for example.

The light source 121B emits light having a wavelength $\lambda_{E2}$ different from the wavelength $\lambda_{E1}$. The light source 121B can adjust the intensity of the light emitted. For example, the light emitted from the light source 121B is condensed by a lens 132, is reflected toward the flow cell 10 by the dichroic mirror 141, is transmitted through a dichroic mirror 142, and reaches the flow cell 10. In a case where a target sequence in a cell is labeled with a fluorescent dye that is excited by the light of the wavelength $\lambda_{E2}$ emitted from the light source 121B, a fluorescence having a wavelength $\lambda_{F2}$ is emitted from a gene locus including the target sequence of the cell that flows in the flow cell 10. The wavelength $\lambda_{F2}$ is the wavelength of red, for example.

The light source 121C emits light having a wavelength $\lambda_{E3}$ different from the wavelengths $\lambda_{E1}$ and $\lambda_{E2}$. The light source 121C can adjust the intensity of the light emitted. For example, the light emitted from the light source 121C is condensed by a lens 133, is reflected toward the flow cell 10 by the dichroic mirror 142, and reaches the flow cell 10. In a case where a target sequence in a cell is labeled with a fluorescent dye that is excited by the light of the wavelength $\lambda_{E3}$ emitted from the light source 121C, a fluorescence having a wavelength $\lambda_{F3}$ is emitted from a gene locus including the target sequence of the cell that flows in the flow cell 10. The wavelength $\lambda_{F3}$ is the wavelength of blue, for example.

The light source 121D emits light having a wavelength $\lambda_{E4}$ different from the wavelengths $\lambda_{E1}$ to $\lambda_{E3}$. The light source 121D can adjust the intensity of the light emitted. The light of the wavelength $\lambda_{E4}$ is visible light, for example. For example, the light emitted from the light source 121D is condensed by a lens 134, and reaches the flow cell 10. The light of the wavelength $\lambda_{E4}$ is transmitted through a particle in the flow cell 10. Therefore, transmitted light of the wavelength $\lambda_{E4}$ is generated from the particle.

The fluorescences of the wavelengths $\lambda_{F1}$ to $\lambda_{F3}$ and the transmitted light of the wavelength $\lambda_{E4}$, which have been generated from the particle in the flow cell 10, pass through a lens 135, are transmitted through the dichroic mirror 143, and reach an optical unit 144. In the optical unit 144, four dichroic mirrors are combined, for example. The four dichroic mirrors reflect the fluorescences of the wavelengths $\lambda_{F1}$ to $\lambda_{F3}$ and the transmitted light of the wavelength $\lambda_{E4}$ at angles slightly different from each other toward the detector 162. The fluorescences of the wavelengths $\lambda_{F1}$ to $\lambda_{F3}$ and the transmitted light of the wavelength $\lambda_{E4}$, which have been reflected by the optical unit 144, are condensed by a lens 137, and reach different positions on the light receiving surface of the detector 162. The lens 137 may be selected from among a plurality of lenses for changing magnification of each particle image on the light receiving surface. The detector 162 has, at the light receiving surface, a plurality of photoelectric converters. The respective photoelectric converters convert the fluorescences and the transmitted light into electric signals. The sensitivities of the respective photoelectric converters are adjustable.

For example, the detector 162 is a TDI imaging device, and includes a CCD array as a photoelectric converter array. The detector 162 receives, from the controller 300 shown in FIG. 1, information of the value of the flow velocity of the particle that flows in the flow cell 10. The detector 162 shown in FIG. 2 generates three fluorescence images corresponding to the fluorescences of the wavelengths $\lambda_{F1}$ to $\lambda_{F3}$ and a bright field image corresponding to the transmitted light of the wavelength $\lambda_{E4}$, with the received value of the flow velocity being synchronized with a scanning rate (charge transfer rate) of the CCD array. The brightness of each fluorescence image is proportional to the intensity of the electric signal obtained through photoelectric conversion from the corresponding fluorescence in the detector 162.

The controller 300 shown in FIG. 1 calculates an absolute value of a difference between the measurement value of the flow velocity of the particle and a reference value of a flow velocity. For example, the reference value of the flow velocity is set based on a flow velocity with which the brightness of the captured fluorescence has an appropriate predetermined value. In this disclosure, "absolute value of a difference" is simply referred to as "difference". When the difference between the measurement value of the flow velocity of the particle and the reference value of the flow velocity is greater than a predetermined value, the controller 300 changes the liquid sending condition for the liquid sending unit 40. When the difference between the measurement value of the flow velocity of the particle and the reference value of the flow velocity is smaller than the predetermined value, the controller 300 may change the detection condition for the detector 162, may change the light-emitting condition for the light source 121, or may change the magnification condition for the lens 137.

Although the liquid sending unit 40 can significantly change the flow velocity of a cell flowing in the flow cell 10 by changing the liquid sending condition, there are cases where the liquid sending unit 40 is not suitable for minutely changing the flow velocity. Therefore, the predetermined value of a difference in flow velocity is set based on, for example, a minimum value of a variation width of the flow velocity that is variable by the liquid sending unit 40 changing the liquid sending condition.

Although the brightness of the fluorescence image can be minutely changed by changing each of the detection condition for the detector 162, the light-emission condition for the light source 121, the magnification condition for the lens 137, and the like, there are cases where it is difficult to significantly change the detection condition, the light-emission condition, and the magnification condition. Therefore, the predetermined value of a difference in flow velocity may be set based on a maximum value of a variation width of the brightness of the fluorescence image which is variable by changing the detection condition, the light emission condition, or the magnification condition.

Information indicating the reference value of the flow velocity and the predetermined value of a difference in flow velocity is stored in a memory included in the controller 300, or a storage device 351 connected to the controller 300. This information may be changed by an input from a user, for example.

The liquid sending condition for the liquid sending unit 40 is, for example, a liquid amount per unit time when the sheath liquid sending unit 40A sends the sheath liquid to the flow cell 10, or a liquid amount per unit time when the sample liquid sending unit 40B sends the sample liquid to the flow cell 10. Alternatively, the liquid sending condition may be a pressure at which the sheath liquid sending unit 40A sends the sheath liquid to the flow cell 10, or a pressure at which the sample liquid sending unit 40B sends the sample liquid to the flow cell 10. The brightness of the fluorescence image is proportional to the intensity of the electric signal obtained by the detector 162, and the intensity of the electric signal obtained by the detector 162 is inversely proportional to the flow velocity of the liquid flowing in the flow cell 10. Therefore, as shown in FIG. 4, the brightness of the fluorescence image is inversely proportional to the flow velocity of the liquid flowing in the flow cell 10. The flow velocity of the liquid flowing in the flow cell 10 shown in FIG. 1 is proportional to the amount of the liquid sent by the liquid sending unit 40 or a pressure applied to the liquid.

Therefore, for example, when the measurement value of the flow velocity is greater than the reference value of the flow velocity and the difference is greater than the predetermined value, the controller 300 reduces the amount of the sheath liquid to be sent to the flow cell 10 by the sheath liquid sending unit 40A, and the amount of the sample liquid to be sent to the flow cell 10 by the sample liquid sending unit 40B. When the measurement value of the flow velocity is smaller than the reference value of the flow velocity and the difference is greater than the predetermined value, the controller 300 increases the amount of the sheath liquid to be sent to the flow cell 10 by the sheath liquid sending unit 40A, and the amount of the sample liquid to be sent to the flow cell 10 by the sample liquid sending unit 40B. The controller 300, performing the control as described above, approximates the flow velocity of the particle flowing in the flow cell 10 to the reference value, and approximates the brightness of the fluorescence image to the appropriate value, thereby reducing variation in the brightness.

Usually, the flow rate of the sheath liquid is higher than the flow rate of the sample liquid. Therefore, as for influence on the flow velocity of a particle contained in the sample liquid, the feeding amount of the sheath liquid is more dominant than the feeding amount of the sample liquid. Therefore, the controller 300 may change the amount of the sheath liquid to be sent to the flow cell 10 by the sheath liquid sending unit 40A, and may not necessarily change the amount of the sample liquid to be sent to the flow cell 10 by the sample liquid sending unit 40B.

Focus is placed on only the sheath liquid out of the sheath liquid and the sample liquid, and it is assumed that the pressure applied to the sheath liquid in the chamber 41 is constant, and the viscosity of the sheath liquid is constant. Then, the flow velocity v of the sheath liquid is approximated by the following equation (3).

$$v = (2gh)^{1/2} \cdots (3)$$

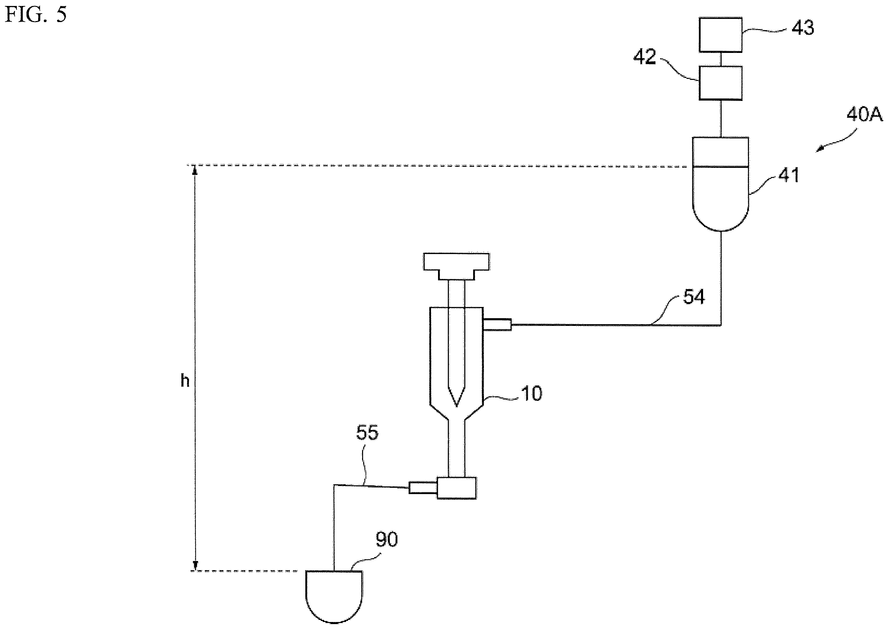

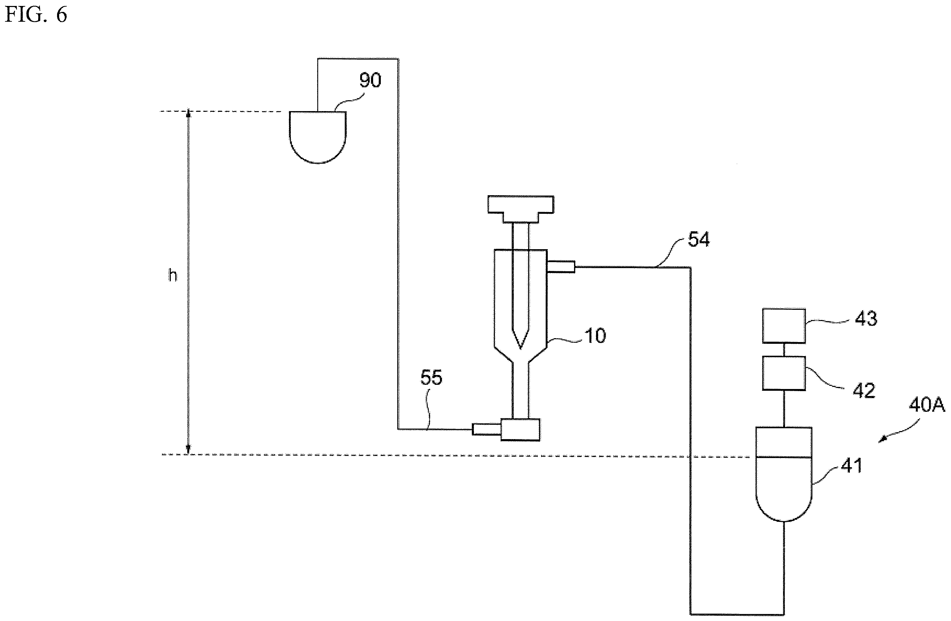

where g indicates the acceleration of gravity, and h indicates a difference in height between the liquid level of the sheath liquid in the chamber 41 and the open end of the waste liquid flow path 55 as shown in FIG. 5. Therefore, when the liquid level of the sheath liquid in the chamber 41 is lowered, the difference h in height is decreased in equation (3), whereby the flow velocity v of the sheath liquid is reduced. The same applies to the case where the liquid level of the sheath liquid in the chamber 41 is at a position higher than the open end of the waste liquid flow path 55 as shown in FIG. 5, and to the case where the liquid level of the sheath liquid in the chamber 41 is at a position lower than the open end of the waste liquid flow path 55 as shown in FIG. 6. Although it is assumed that the viscosity of the sheath liquid is constant in equation (3), even when the viscosity of the sheath liquid changes with temperature change or the like, the flow velocity v of the sheath liquid can be changed.

Meanwhile, in the flow cytometer according to the embodiment, the amount of the sheath liquid to be sent to the flow cell 10 by the sheath liquid sending unit 40A and the amount of the sample liquid to be sent to the flow cell 10 by the sample liquid sending unit 40B are feedback-controlled based on the measurement value of the flow velocity that has been calculated. Therefore, even when the liquid level of the sheath liquid in the chamber 41 varies or the viscosity of the sheath liquid changes, the flow velocity of each cell flowing in the flow cell 10 can be approximated to the reference value of the flow velocity, and the brightness of the fluorescence image can be approximated to the appropriate value, whereby variation in the brightness can be reduced.

The detection condition for the detector 162 shown in FIG. 1 is, for example, the sensitivity of the photoelectric converter included in the detector 162. The brightness of the fluorescence image is proportional to the sensitivity of the photoelectric converter. Therefore, for example, when the measurement value of the flow velocity is greater than the reference value of the flow velocity and the difference is smaller than the predetermined value, the controller 300 shown in FIG. 1 increases the sensitivity of the photoelectric converter included in the detector 162. When the measurement value of the flow velocity is smaller than the reference value of the flow velocity and the difference is smaller than the predetermined value, the controller 300 reduces the sensitivity of the photoelectric converter in the detector 162. With this control, the controller 300 approximates the brightness of the fluorescence image to the appropriate value, and reduces variation in the brightness.

The light emission condition for the light source 121 is, for example, the intensity of light emitted from the light source 121. The brightness of the fluorescence image is proportional to the intensity of light emitted from the light source 121. Therefore, for example, when the measurement value of the flow velocity is greater than the reference value of the flow velocity and the difference is smaller than the predetermined value, the controller 300 increases the intensity of light emitted from the light source 121. When the measurement value of the flow velocity is smaller than the reference value of the flow velocity and the difference is smaller than the predetermined value, the controller 300 reduces the intensity of light emitted from the light source 121. With this control, the controller 300 approximates the brightness of the fluorescence image to the appropriate value, and reduces variation in the brightness.

The magnification condition for the lens 137 is, for example, the magnification of a particle image that is formed on the light receiving surface of the detector 162 by the lens 137. The brightness of the fluorescence image is inversely proportional to the magnification of the particle image formed by the lens 137. Therefore, for example, when the measurement value of the flow velocity is greater than the reference value of the flow velocity and the difference is smaller than the predetermined value, the controller 300 replaces the lens 137 to reduce the magnification of the particle image formed by the lens 137. When the measurement value of the flow velocity is smaller than the reference value of the flow velocity and the difference is smaller than the predetermined value, the controller 300 replaces the lens 137 to increase the magnification of the particle image formed by the lens 137. With this control, the controller 300 approximates the brightness of the fluorescence image to the appropriate value, and reduces variation in the brightness.

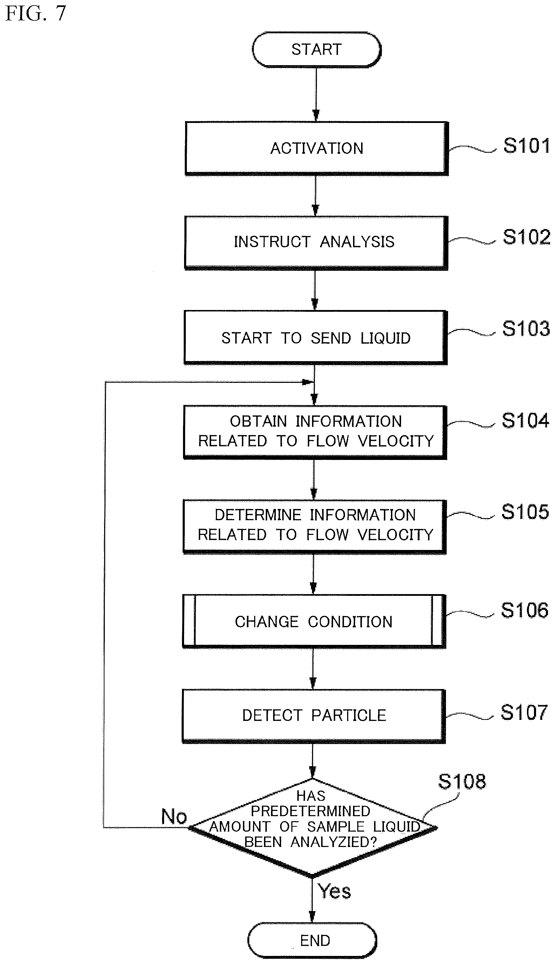

Next, a particle detection method according to the embodiment will be described with reference to FIG. 7, FIG. 8, and FIG. 9. As shown in FIG. 7, the particle detection method according to the embodiment includes: step S101 of activating the flow cytometer; step S102 of instructing the flow cytometer to perform analysis; step S103 of starting sending of a liquid into the flow cell 10; step S104 of acquiring information related to the flow velocity of the liquid flowing in the flow cell 10; step S105 of determining information related to the acquired flow velocity; step S106 of changing the liquid sending condition for sending the liquid into the flow cell 10; and step S107 of detecting light generated from a particle in the liquid irradiated with light in the flow cell 10.

In step S101 in FIG. 7, the flow cytometer according to the embodiment is activated. In step S102, the flow cytometer is instructed to start analysis of particles. In step S103, the sheath liquid sending unit 40A shown in FIG. 1 starts to send a predetermined amount of the sheath liquid to the flow cell 10, and the sample liquid sending unit 40B starts to send a predetermined amount of the sample liquid containing particles to the flow cell 10. In step S104, the light source 121A shown in FIG. 2 applies light to each particle flowing in the flow cell 10, and the flow velocity detector 161 detects modulated light, of scattered light generated from the particle, which is caused by the optical grating 151. The controller 300 shown in FIG. 1 calculates a measurement value of a flow velocity, as a value related to the flow velocity, based on the cycle of the modulated light. Note that step S104 may be started concurrently with step S103.

In step S105, the controller 300 calculates a measurement value of a flow velocity. In addition, the controller 300 reads out a reference value of a flow velocity from a memory or the storage device 351. Next, the controller 300 calculates a difference between the measurement value of the flow velocity of the particle and the reference value of the flow S106 velocity. In step, when the difference between the measurement value of the flow velocity of the particle and the reference value of the flow velocity is greater than a predetermined value, the controller 300 changes the liquid sending condition for the liquid sending unit 40. When the difference between the measurement value of the flow velocity of the particle and the reference value of the flow velocity is smaller than the predetermined value, the controller 300 changes the detection condition for the detector 162. The controller 300 may change the light emission condition for the light source 121, or may change the magnification condition for the lens 137.

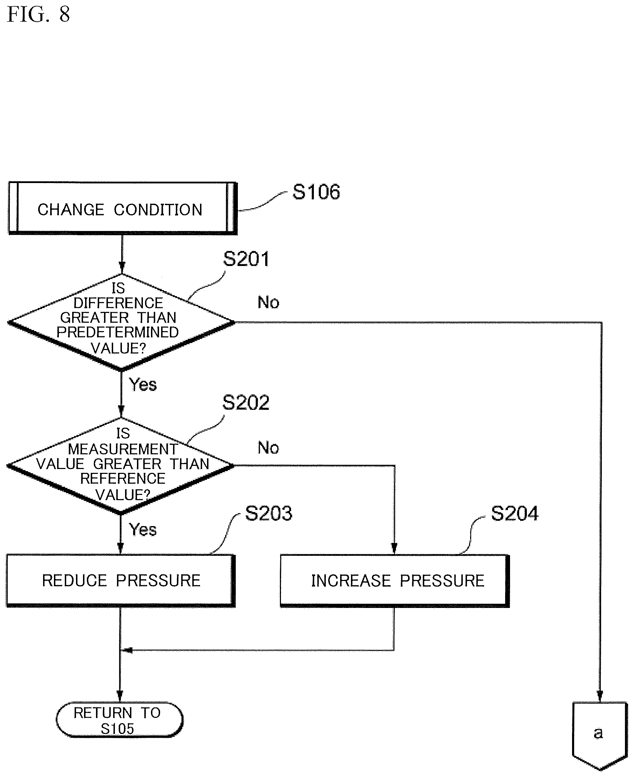

Specifically, in step S201 in FIG. 8, the controller 300 determines whether or not the difference between the measurement value of the flow velocity of the particle and the reference value of the flow velocity is greater than the predetermined value. When the determination result is that the difference is greater than the predetermined value, the controller 300 goes to step S202 and determines whether or not the measurement value of the flow velocity is greater than the reference value. When the determination result is that the difference is greater than the predetermined value and the measurement value is greater than the reference value, the controller 300 goes to step S203 and controls the liquid sending unit 40 to reduce the liquid feeding amount so as to approximate the difference to zero. Thereafter, the controller 300 returns to step S105 in FIG. 7. In steps S201 and S202 in FIG. 8, when the determination result is that the difference is greater than the predetermined value and the measurement value is smaller than the reference value, the controller 300 goes to step S204 and controls the liquid sending unit 40 to increase the liquid feeding amount so as to approximate the difference to zero. Thereafter, the controller 300 returns to step S105 in FIG. 7.

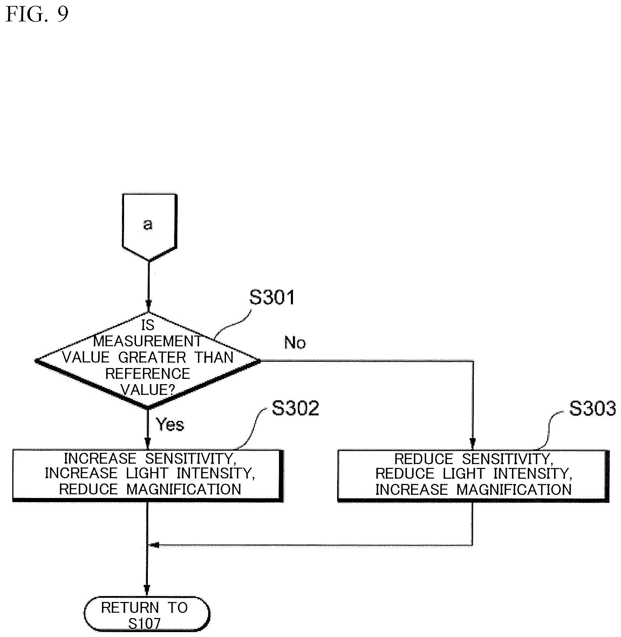

When the determination result in step S201 in FIG. 8 is that the difference between the measurement value of the flow velocity of the particle and the reference value of the flow velocity is not greater than the predetermined value, the controller 300 goes to step S301 in FIG. 9 and determines whether or not the measurement value of the flow velocity is greater than the reference value. When the determination result is that the difference is smaller than the predetermined value and the measurement value is greater than the reference value, the controller 300 goes to step S302 and changes the detection condition for the detector 162 so as to approximate the brightness of the fluorescence image to the appropriate value. The controller 300 may change the light emission condition for the light source 121, or may change the magnification condition for the lens 137. When the determination result in steps S201 and S301 is that the difference is smaller than the predetermined value and the measurement value is smaller than the reference value, the controller 300 goes to step S303 and changes the detection condition for the detector 162 so as to approximate the brightness of the fluorescence image to the appropriate value. The controller 300 may change the light emission condition for the light source 121, or may change the magnification condition for the lens 137.

When the detection condition has been changed in step S302 or step S303, the detector 162, in step S107, generates a fluorescence image of the particle. Analysis is completed when a predetermined amount of the sample liquid has been analyzed.

According to the flow cytometer and the particle detection method of the present embodiment, even when the flow velocity of the liquid flowing in the flow cell 10 varies while being affected by the ambient temperature, apparatus temperature, liquid temperature, liquid viscosity, change in the liquid level of the liquid in the supply chamber, etc., it is possible to reduce influence of variation in the flow velocity on the brightness of the fluorescence image. If the brightness of the fluorescence image varies even though the flow cytometer of the embodiment is used, it is possible to determine that the condition for fluorescent staining of particles has been varied.

In the flow cytometer, when captured particle images are analyzed, in order to inhibit reduction in analysis precision due to noise, images whose brightness values are smaller than a predetermined value are sometimes excluded from targets to be analyzed. Meanwhile, in the flow cytometer and the particle detection method according to the embodiment, since images of the desired brightness are obtained, the number of images to be excluded from the targets to be analyzed can be reduced. Thus, population of images to be analyzed is increased, whereby accurate analysis of particles can be performed.

The present invention has been described through the above embodiment, but it must not be understood that this invention is limited by the statements and the drawings constituting a part of this disclosure. From this disclosure, various alternative embodiments, examples, and operational technologies will become apparent to those skilled in the art without departing from the scope of the invention as defined in the appended claims.

INDUSTRIAL APPLICABILITY

The present invention can be suitably used in the field of analysis of a biological sample liquid containing particles such as cells and microorganisms, for example.

DESCRIPTION OF THE REFERENCE CHARACTERS

| | |
|---|---|
| 10 | flow cell |
| 21 | syringe |
| 22 | operating element |
| 23 | driving device |
| 40 | liquid sending unit |
| 40A | sheath liquid sending unit |
| 40B | sample liquid sending unit |
| 41 | chamber |

| 42 | electropneumatic converter |
| 43 | compressor |
| 53 | sample liquid flow path |
| 54 | sheath liquid flow path |
| 55 | waste liquid flow path |
| 90 | waste liquid chamber |
| 121 | light source |
| 121A | light source |
| 121B | light source |
| 121C | light source |
| 121D | light source |
| 131 | lens |
| 132 | lens |
| 133 | lens |
| 134 | lens |
| 135 | lens |
| 136 | lens |
| 137 | lens |
| 141 | dichroic mirror |
| 142 | dichroic mirror |
| 143 | dichroic mirror |
| 144 | optical unit |
| 151 | optical grating |
| 152 | transparent portion |
| 153 | opaque portion |
| 161 | flow velocity detector |
| 162 | detector |
| 300 | controller |
| 351 | storage device |

## Claims

1. A flow cytometer comprising:

   a flow cell (10);
   a liquid sending unit (40) configured to send a liquid into the flow cell (10);
   a controller (300) configured to obtain information related to a flow velocity of the liquid flowing in the flow cell (10);
   a light source (121) configured to irradiate the liquid flowing in the flow cell (10) with light; and
   a detector (162) configured to detect light generated from a particle in the liquid irradiated with light, wherein
   the controller (300) changes a liquid sending condition for the liquid sending unit (40), based on the obtained information related to the flow velocity, and
   **characterised in that**
   the controller (300) calculates the information related to the flow velocity, based on an optical property of the particle flowing in the flow cell.

2. The flow cytometer according to claim 1, wherein the controller (300) further changes a detection condition for the detector (162), based on the obtained information related to the flow velocity.

3. The flow cytometer according to claim 2, wherein the controller (300) selectively changes the liquid sending condition for the liquid sending unit (40) or the detection condition for the detector (162), based on the obtained information related to the flow velocity.

4. The flow cytometer according to claim 2, wherein

   the controller (300)
   changes the liquid sending condition for the liquid sending unit (40) when a difference between a measurement value of the obtained flow velocity and a reference value of a flow velocity is greater than a predetermined value, and changes the detection condition for the detector (162) when the difference between the measurement value of the obtained flow velocity and the reference value of the flow velocity is smaller than the predetermined value.

5. The flow cytometer according to claim 4, wherein

   the controller (300)
   causes the liquid sending unit (40) to reduce an amount of the liquid to be sent into the flow cell (10), when the measurement value of the obtained flow velocity is greater than the reference value of the flow velocity and the difference is greater than the predetermined value, and causes the liquid sending unit (40) to increase the amount of the liquid to be sent into the flow cell (10), when the measurement value of the obtained flow velocity is smaller than the reference value of the flow velocity and the difference is greater than the predetermined value.

6. The flow cytometer according to claim 1, wherein the detector (162) includes a photoelectric converter configured to perform photoelectric conversion of the light generated from the particle flowing in the flow cell.

7. The flow cytometer according to claim 1, wherein the controller (300) further changes sensitivity of the detector (162), based on the obtained information related to the flow velocity.

8. The flow cytometer according to claim 1, further comprising a lens (137) configured to condense the light generated from the particle in the liquid irradiated with light.

9. The flow cytometer according to claim 8, wherein the controller (300) further changes magnification of an image, of the particle, formed by the lens (137), based on the obtained information related to the flow velocity.

10. The flow cytometer according to claim 1, wherein the controller (300) further changes an intensity of light emitted from the light source (121), based on the obtained information related to the flow velocity.

11. The flow cytometer according to claim 1, wherein the detector (162) captures an image of the particle flowing in the flow cell (10).

12. The flow cytometer according to claim 1, wherein the detector (162) captures an image of the particle flowing in the flow cell (10), according to TDI (Time Delay Integration).

13. The flow cytometer according to claim 12, wherein the detector (162) sets a scanning rate, based on the obtained information related to the flow velocity.

14. A particle detection method comprising:

sending a liquid into a flow cell (10);
obtaining information related to a flow velocity of the liquid flowing in the flow cell (10);
changing a liquid sending condition for sending the liquid into the flow cell (10), based on the obtained information related to the flow velocity;
irradiating the liquid flowing in the flow cell (10) with light; and
detecting light generated from a particle in the liquid irradiated with light,
and **characterised in that** it further comprises:
calculating the information related to the flow velocity based on an optical property of the particle flowing in the flow cell (10).

**Patentansprüche**

1. Durchflusszytometer, umfassend:

eine Durchflusszelle (10);
eine Flüssigkeitszuführeinheit (liquid sending unit) (40), die so konfiguriert ist, dass sie eine Flüssigkeit in die Durchflusszelle (10) zuführt;
eine Steuerung (300), die so konfiguriert ist, dass sie Informationen im Zusammenhang mit einer Fließgeschwindigkeit der in der Durchflusszelle (10) fließenden Flüssigkeit erhält;
eine Lichtquelle (121), die so konfiguriert ist, dass sie die in der Durchflusszelle (10) fließende Flüssigkeit mit Licht bestrahlt; und
einen Detektor (162), der so konfiguriert ist, dass er von einem Partikel in der mit Licht bestrahlten Flüssigkeit erzeugtes Licht detektiert, wobei
die Steuerung (300) eine Flüssigkeitszuführbedingung für die Flüssigkeitszuführeinheit (40) auf Grundlage der erhaltenen Informationen im Zusammenhang mit der Fließgeschwindigkeit verändert und
**dadurch gekennzeichnet, dass**
die Steuerung (300) die Informationen im Zusammenhang mit der Fließgeschwindigkeit auf Grundlage einer optischen Eigenschaft des in der Durchflusszelle fließenden Partikels berechnet.

2. Durchflusszytometer gemäß Anspruch 1, wobei die Steuerung (300) weiterhin eine Detektionsbedingung für den Detektor (162) auf Grundlage der erhaltenen Informationen im Zusammenhang mit der Fließgeschwindigkeit ändert.

3. Durchflusszytometer gemäß Anspruch 2, wobei die Steuerung (300) selektiv die Flüssigkeitszuführbedingung für die Flüssigkeitszuführeinheit (40) oder die Detektionsbedingung für den Detektor (162) auf Grundlage der erhaltenen Informationen im Zusammenhang mit der Fließgeschwindigkeit ändert.

4. Durchflusszytometer gemäß Anspruch 2, wobei

die Steuerung (300)
die Flüssigkeitszuführbedingung für die Flüssigkeitszuführeinheit (40) ändert, wenn eine Differenz zwischen einem Messwert der erhaltenen Fließgeschwindigkeit und einem Referenzwert einer Fließgeschwindigkeit größer ist als ein vorbestimmter Wert, und
die Detektionsbedingung für den Detektor (162) ändert, wenn die Differenz zwischen dem Messwert der erhaltenen Fließgeschwindigkeit und dem Referenzwert der Fließgeschwindigkeit kleiner ist als der vorbestimmte Wert.

5. Durchflusszytometer gemäß Anspruch 4, wobei

die Steuerung (300)
die Flüssigkeitszuführeinheit (40) dazu bringt, eine Menge der in die Durchflusszelle (10) zuzuführenden Flüssigkeit zu reduzieren, wenn der Messwert der erhaltenen Fließgeschwindigkeit größer ist als der Referenzwert der Fließgeschwindigkeit und die Differenz größer ist als der vorbestimmte Wert, und
die Flüssigkeitszuführeinheit (40) dazu bringt, die Menge der in die Durchflusszelle (10) zuzuführenden Flüssigkeit zu steigern, wenn der Messwert der erhaltenen Fließgeschwindigkeit kleiner ist als der Referenzwert der Fließgeschwindigkeit und die Differenz größer ist als der vorbestimmte Wert.

6. Durchflusszytometer gemäß Anspruch 1, wobei der Detektor (162) einen photoelektrischen Konverter einschließt, der so konfiguriert ist, dass er eine photoelektrische Umwandlung des Lichts, erzeugt von dem in der Durchflusszelle fließenden Partikel, durchführt.

7. Durchflusszytometer gemäß Anspruch 1, wobei die Steuerung (300) weiterhin die Empfindlichkeit des Detektors (162) auf Grundlage der erhaltenen Informationen im Zusammenhang mit der Fließgeschwindigkeit ändert.

8. Durchflusszytometer gemäß Anspruch 1, welches weiterhin eine Linse (137) umfasst, die so konfiguriert ist, dass sie das Licht, erzeugt durch das Partikel in der mit Licht bestrahlten Flüssigkeit, kondensiert.

9. Durchflusszytometer gemäß Anspruch 8, wobei die Steuerung (300) weiterhin die Vergrößerung einer Abbildung des Partikels, gebildet durch die Linse (137), auf Grundlage der erhaltenen Informationen im Zusammenhang mit der Fließgeschwindigkeit ändert.

10. Durchflusszytometer gemäß Anspruch 1, wobei die Steuerung (300) weiterhin eine Intensität von von der Lichtquelle (121) emittiertem Licht auf Grundlage der erhaltenen Informationen im Zusammenhang mit der Fließgeschwindigkeit ändert.

11. Durchflusszytometer gemäß Anspruch 1, wobei der Detektor (162) eine Abbildung des in der Durchflusszelle (10) fließenden Partikels erfasst.

12. Durchflusszytometer gemäß Anspruch 1, wobei der Detektor (162) eine Abbildung des in der Durchflusszelle (10) fließenden Partikels gemäß TDI (Time Delay Integration) erfasst.

13. Durchflusszytometer gemäß Anspruch 12, wobei der Detektor (162) eine Abtastrate auf Grundlage der erhaltenen Informationen im Zusammenhang mit der Fließgeschwindigkeit festsetzt.

14. Partikeldetektionsverfahren, welches umfasst:

Zuführen einer Flüssigkeit in eine Durchflusszelle (10);
Erhalten von Informationen im Zusammenhang mit einer Fließgeschwindigkeit der in der Durchflusszelle (10) fließenden Flüssigkeit;
Verändern einer Flüssigkeitszuführbedingung zum Zuführen der Flüssigkeit in die Durchflusszelle (10) auf Grundlage der erhaltenen Informationen im Zusammenhang mit der Fließgeschwindigkeit;
Bestrahlen der in der Durchflusszelle (10) fließenden Flüssigkeit mit Licht; und
Detektieren von Licht, erzeugt von einem Partikel in der mit Licht bestrahlten Flüssigkeit, und **dadurch gekennzeichnet, dass** es weiterhin umfasst:
Berechnen der Informationen im Zusammenhang mit der Fließgeschwindigkeit auf Grundlage einer optischen Eigenschaft des in der Durchflusszelle (10) fließenden Partikels.

## Revendications

1. Cytomètre en flux comprenant :

une cellule d'écoulement (10) ;
une unité d'envoi de liquide (40) configurée pour envoyer un liquide dans la cellule d'écoulement (10) ;
un moyen de commande (300) configuré pour obtenir des informations relatives à une vitesse d'écoulement du liquide s'écoulant dans la cellule d'écoulement (10) ;
une source de lumière (121) configurée pour irradier de lumière le liquide s'écoulant dans la cellule d'écoulement (10) ; et
un détecteur (162) configuré pour détecter de la lumière générée depuis une particule dans le liquide irradié de lumière, dans lequel
le moyen de commande (300) modifie une condition d'envoi de liquide pour l'unité d'envoi de liquide (40), sur la base des informations obtenues relatives à la vitesse d'écoulement, et **caractérisé en ce que** le moyen de commande (300) calcule les informations relatives à la vitesse d'écoulement, sur la base d'une propriété optique de la particule s'écoulant dans la cellule d'écoulement.

2. Cytomètre en flux selon la revendication 1, dans lequel le moyen de commande (300) modifie en outre une condition de détection pour le détecteur (162), sur la base des informations obtenues relatives à la vitesse d'écoulement.

3. Cytomètre en flux selon la revendication 2, dans lequel le moyen de commande (300) modifie de manière sélective la condition d'envoi de liquide pour l'unité d'envoi de liquide (40) ou la condition de détection pour le détecteur (162), sur la base des informations obtenues relatives à la vitesse d'écoulement.

4. Cytomètre en flux selon la revendication 2, dans lequel

le moyen de commande (300)
modifie la condition d'envoi de liquide pour l'unité d'envoi de liquide (40) lorsqu'une différence entre une valeur de mesure de la vitesse d'écoulement obtenue et une valeur de référence d'une vitesse d'écoulement est supérieure à une valeur prédéterminée, et

modifie la condition de détection pour le détecteur (162) lorsque la différence entre la valeur de mesure de la vitesse d'écoulement obtenue et la valeur de référence de la vitesse d'écoulement est inférieure à la valeur prédéterminée.

5. Cytomètre en flux selon la revendication 4, dans lequel

le moyen de commande (300) amène l'unité d'envoi de liquide (40) à réduire une quantité du liquide à envoyer dans la cellule d'écoulement (10), lorsque la valeur de mesure de la vitesse d'écoulement obtenue est supérieure à la valeur de référence de la vitesse d'écoulement et la différence est supérieure à la valeur prédéterminée, et amène l'unité d'envoi de liquide (40) à augmenter la quantité du liquide à envoyer dans la cellule d'écoulement (10), lorsque la valeur de mesure de la vitesse d'écoulement obtenue est inférieure à la valeur de référence de la vitesse d'écoulement et la différence est supérieure à la valeur prédéterminée.

6. Cytomètre en flux selon la revendication 1, dans lequel le détecteur (162) comporte un convertisseur photoélectrique configuré pour effectuer une conversion photoélectrique de la lumière générée depuis la particule s'écoulant dans la cellule d'écoulement.

7. Cytomètre en flux selon la revendication 1, dans lequel le moyen de commande (300) modifie en outre une sensibilité du détecteur (162), sur la base des informations obtenues relatives à la vitesse d'écoulement.

8. Cytomètre en flux selon la revendication 1, comprenant en outre une lentille (137) configurée pour condenser la lumière générée depuis la particule dans le liquide irradié de lumière.

9. Cytomètre en flux selon la revendication 8, dans lequel le moyen de commande (300) modifie en outre un grossissement d'une image, de la particule, formée par la lentille (137), sur la base des informations obtenues relatives à la vitesse d'écoulement.

10. Cytomètre en flux selon la revendication 1, dans lequel le moyen de commande (300) modifie en outre une intensité de lumière émise à partir de la source de lumière (121), sur la base des informations obtenues relatives à la vitesse d'écoulement.

11. Cytomètre en flux selon la revendication 1, dans lequel le détecteur (162) capture une image de la particule s'écoulant dans la cellule d'écoulement (10).

12. Cytomètre en flux selon la revendication 1, dans lequel le détecteur (162) capture une image de la particule s'écoulant dans la cellule d'écoulement (10), selon un photodétecteur à report et intégration (TDI, Time Delay Intégration).

13. Cytomètre en flux selon la revendication 12, dans lequel le détecteur (162) définit une vitesse de balayage, sur la base des informations obtenues relatives à la vitesse d'écoulement.

14. Procédé de détection de particules comprenant :

un envoi d'un liquide dans une cellule d'écoulement (10) ; une obtention d'informations relatives à une vitesse d'écoulement du liquide s'écoulant dans la cellule d'écoulement (10) ; une modification d'une condition d'envoi de liquide pour envoyer le liquide dans la cellule d'écoulement (10), sur la base des informations obtenues relatives à la vitesse d'écoulement ; une irradiation de lumière du liquide s'écoulant dans la cellule d'écoulement (10) ; et une détection de lumière générée depuis une particule dans le liquide irradié de lumière, et **caractérisé en ce qu'**il comprend en outre : un calcul des informations relatives à la vitesse d'écoulement sur la base d'une propriété optique de la particule s'écoulant dans la cellule d'écoulement (10).

FIG. 1

EP 3 779 405 B1

FIG. 2

EP 3 779 405 B1

TO COMPUTER 300

FIG. 3

FIG. 4

FIG. 5

FIG. 6

FIG. 7

START

ACTIVATION — S101

INSTRUCT ANALYSIS — S102

START TO SEND LIQUID — S103

OBTAIN INFORMATION
RELATED TO FLOW VELOCITY — S104

DETERMINE INFORMATION
RELATED TO FLOW VELOCITY — S105

CHANGE CONDITION — S106

DETECT PARTICLE — S107

S108
HAS PREDETERMINED
AMOUNT OF SAMPLE LIQUID
BEEN ANALYZIED?

No

Yes

END

FIG. 8

FIG. 9

a

S301

IS MEASUREMENT VALUE GREATER THAN REFERENCE VALUE?

No

Yes

S302

INCREASE SENSITIVITY, INCREASE LIGHT INTENSITY, REDUCE MAGNIFICATION

S303

REDUCE SENSITIVITY, REDUCE LIGHT INTENSITY, INCREASE MAGNIFICATION

RETURN TO S107

**EP 3 779 405 B1**

**Patent documents cited in the description**

- US 6507391 B

- US 2005105077 A1